# EUROPÄISCHE PATENTSCHRIFT

(11) **EP 3 159 314 B1**
(45) Veröffentlichungstag und Bekanntmachung des Hinweises auf die Patenterteilung: **09.09.2020**
(21) Anmeldenummer: 16195169.4
(22) Anmeldetag: 21.10.2016
(51) Int. Cl.: C02F 3/12, B01D 24/36, B01D 24/46, C02F 3/08

(54) **NACHKLÄREINHEIT, VERFAHREN UND VERWENDUNG**
CLARIFICATION UNIT, METHOD AND USE
UNITÉ DE CLARIFICATION, PROCÉDÉ ET UTILISATION

(30) Priorität: 23.10.2015 DE 102015118166
(43) Veröffentlichungstag der Anmeldung: 26.04.2017
(73) Patentinhaber: Lorch, Roland, 88348 Bad Saulgau (DE); Schaible, Jürgen, 88299 Leutkirch im Allgäu (DE)
(72) Erfinder: Lorch, Roland, 88348 Bad Saulgau (DE); Schaible, Jürgen, 88299 Leutkirch im Allgäu (DE)
(74) Vertreter: Patentanwälte Olbricht, Buchold, Keulertz Partnerschaft mbB

(56) Entgegenhaltungen:
- WO-A1-95/25696
- DE-A1- 2 835 322
- FR-A- 1 163 122
- US-A- 4 438 000

## Beschreibung

Die Erfindung betrifft eine Nachkläreinheit für eine Abwasserreinigungsvorrichtung, welche einen Behälter, in welchem ein Einlass und ein Auslass ausgebildet sind, und ein Filterelement aufweist, welches in dem Behälter zum Klären eines Fluids, welches vom Einlass zum Auslass strömt, angeordnet ist. Die Erfindung betrifft des Weiteren ein zugehöriges Verfahren, eine zugehörige Verwendung sowie eine Abwasserreinigungsvorrichtung mit einer solchen Nachkläreinheit.

Abwasserreinigungsvorrichtungen werden häufig verwendet um Wasser, welches verschmutzt ist, so zu reinigen, dass es beispielsweise in eine Kanalisation oder in einen Vorfluter eingeleitet werden kann. Insbesondere sind sie typischerweise so ausgelegt, dass im gereinigten Wasser bestimmte Grenzwerte für diverse Schadstoffe eingehalten werden.

Eine Abwasserreinigungsvorrichtung weist typischerweise einen Schlammfang, ein dem Schlammfang fluidisch nachgeschaltetes Belebungsbecken zur biologischen Abwasserreinigung, und eine Nachkläreinheit auf. In dem Schlammfang können dabei insbesondere gröbere Schmutzpartikel ausgefiltert werden. In dem Belebungsbecken kann insbesondere Luft in das Wasser eingeleitet werden, so dass sich schädliche Substanzen abbauende Bakterien vermehren können. In der Nachkläreinheit erfolgt insbesondere ein Entfernen von übrigbleibenden Partikeln und Schmutzteilchen. Nachkläreinheiten sind beispielsweise aus den Dokumenten WO95/25696 und FR 1.163.122 bekannt.

Bekannte Nachkläreinheiten weisen Filterelemente auf, beispielsweise aus porösem Material oder aus einer Membran. Damit können unerwünschte Partikel und andere Substanzen, welche nicht in die Kanalisation oder in den Vorfluter gelangen sollen, zurückgehalten werden. Derartige Filter bringen jedoch das Problem mit sich, dass sie nur eine begrenzte Aufnahmekapazität haben. Da die im Filter gefangenen Partikel nicht abgebaut werden, verbleiben sie im Filter. Dies führt zu einem hohen Wartungsaufwand, da die Filter regelmäßig ausgetauscht oder in externen Einrichtungen gereinigt werden.

Es ist deshalb eine Aufgabe der Erfindung, eine Nachkläreinheit bereitzustellen, welche insbesondere mit einem geringeren Wartungsaufwand auskommt. Es sind des Weiteren Aufgaben der Erfindung, ein zugehöriges Verfahren und eine zugehörige Verwendung bereitzustellen.

Dies wird erfindungsgemäß durch eine Nachkläreinheit, ein Verfahren und eine Verwendung gemäß den jeweiligen Hauptansprüchen erreicht. Vorteilhafte Ausgestaltungen sind beispielsweise in den jeweiligen Unteransprüchen enthalten.

Die Erfindung betrifft eine Nachkläreinheit für eine Abwasserreinigungsvorrichtung, welche einen Behälter, in welchem ein Einlass und ein Auslass ausgebildet sind, und ein Filterelement aufweist, welches in dem Behälter zum Klären eines Fluids, welches vom Einlass zum Auslass strömt, angeordnet ist.

Erfindungsgemäß ist eine Reinigungseinheit vorgesehen, welche dazu ausgebildet ist, das Filterelement zu reinigen.

Damit kann das Filterelement unmittelbar in der Nachkläreinheit gereinigt werden. Ein Entfernen des Filterelements zur Reinigung in einer externen Einrichtung oder ein Austausch eines verschmutzten Filterelements durch ein sauberes Filterelement ist nicht mehr nötig. Damit werden Aufwand und Kosten für die Reinigung eingespart. Außerdem kann die Reinigung bei der erfindungsgemäßen Nachkläreinheit typischerweise während des laufenden Betriebs erfolgen. Eine Unterbrechung der Abwasserreinigung ist normalerweise nicht erforderlich.

Mögliche Ausgestaltungen des Filterelements und der Reinigungseinheit werden insbesondere weiter unten in dieser Anmeldung beschrieben werden.

Der Behälter kann insbesondere in Form einer Tonne ausgebildet sein. Der Einlass kann insbesondere unten am Behälter angeordnet sein. Der Auslass kann insbesondere oben am Behälter angeordnet sein. Damit kann ein Fluidstrom von unten nach oben erreicht werden.

Gemäß einer Ausführung ist die Reinigungseinheit eine Walkeinheit, welche dazu ausgebildet ist, das Filterelement zum Reinigen zu verformen. Insbesondere kann sie dazu ausgebildet sein, das Filterelement periodisch zu verformen. Durch eine solche Verformung kann im Filterelement festsitzender Schmutz gelöst und in das umgebende Wasser abgegeben werden. Von dort aus kann es einer Ableitung oder Entsorgung zugeführt werden, was weiter unten näher beschrieben werden wird.

Gemäß einer nicht erfindungsgemäßen Ausführung ist die Reinigungseinheit eine Fluidbewegungseinheit, welche dazu ausgebildet ist, zum Reinigen des Filterelements das im Behälter befindliche Fluid zusätzlich zum Strömen vom Einlass zum Auslass durch das Filterelement zu bewegen. Es kann dabei also insbesondere ein Fluidstrom aufgeprägt werden, welcher sich vom sonstigen, also insbesondere ohne Betrieb der Fluidbewegungseinheit vorhandenen Fluidstrom unterscheidet. Damit kann die entsprechende Variation im Fluidstrom auch einfach erkannt oder gemessen werden. Durch den zusätzlichen Fluidstrom kann ebenfalls im Filterelement festsitzender Schmutz gelöst werden. Die Bewegung des Fluids kann insbesondere eine mechanische Auslösung von Schmutz aus dem Filterelement und/oder eine Reibung von Bestandteilen, insbesondere Körpern, des Filterelements gegeneinander zum Auslösen von Schmutz induzieren. Es hat sich gezeigt, dass dabei in typischen Verwendungssituationen eine ausreichende Menge Schmutz aus dem Filterelement entfernt wird, um wieder eine nahe an der Ausgangskapazität liegende Kapazität für die Aufnahme von Schmutz zu erhalten.

Gemäß einer nicht erfindungsgemäßen Ausführung ist die Reinigungseinheit dazu ausgebildet, das im Behälter befindliche Fluid in einer Richtung vom Einlass zum Auslass und/oder vom Auslass zum Einlass durch das Filterelement zu bewegen. Damit kann die oben beschriebene Reinigungswirkung induziert werden. Beispielsweise kann die Richtung auch alternierend geändert werden.

Erfindungsgemäß ist die Reinigungseinheit eine Volumenverkleinerungseinheit, welche dazu ausgebildet ist, zum Reinigen des Filterelements ein für das Filterelement zur Verfügung stehendes Volumen innerhalb des Behälters zu verkleinern. Im Gegensatz dazu sind aus dem Stand der Technik Reinigungseinheiten, die auf eine Vergrößerung des Volumens bei der Reinigung des Filters abzielen, bekannt, z.B. aus US 4,438,000 und DE 28 35 322. Durch die Verkleinerung des Volumens wird insbesondere erreicht, dass Bestandteile des Filterelements, beispielsweise Körper, verstärkt aneinander reiben. Damit können ebenfalls Schmutz oder sonstige Partikel, welche in dem Filterelement festsitzen, aus dem Filterelement gelöst werden. Dies kann insbesondere durch mechanische Reibung erfolgen, welche durch die Verkleinerung des Volumens erreicht wird. Durch die Verkleinerung kann insbesondere eine Reibung von Körpern des Filterelements gegeneinander ermöglicht werden.

Es sei verstanden, dass die beschriebenen Mechanismen bzw. Ausführungen der Reinigungseinheit auch kombiniert werden können.

Gemäß einer bevorzugten Ausführung ist die Reinigungseinheit als Stößel ausgebildet. Damit kann beispielsweise Wasser bewegt werden, insbesondere wie weiter oben oder an anderer Stelle in dieser Anmeldung beschrieben. Es kann damit auch eine Walkbewegung induziert werden. Außerdem kann eine Volumenverkleinerung erreicht werden. Mittels eines Stößels können somit also alle drei eben beschriebenen Reinigungsarten realisiert werden, wobei verstanden sei, dass in einer Nachkläreinheit alle drei Arten oder auch nur zwei Arten oder eine Art realisiert sein können. Auch weitere Reinigungsarten können damit grundsätzlich kombiniert werden.

Der Stößel kann vorteilhaft entlang eines Wegs reziprozierend antreibbar sein und/oder zumindest entlang einer Teilstrecke des Wegs mit dem Filterelement in Kontakt stehen. Damit kann insbesondere eine Walkbewegung zur Reinigung des Filterelements induziert werden, auf welche bereits weiter oben eingegangen wurde. Auch eine Fluidbewegung und/oder eine Volumenverkleinerung können damit jedoch erreicht werden.

Der Stößel weist bevorzugt eine Platte auf, welche in dem Behälter derart angeordnet ist, dass seitlich an der Platte Fluid vorbeiströmen kann und/oder welche zumindest teilweise fluiddurchlässig ausgebildet ist, beispielsweise als Lochblech. Damit kann die Platte insbesondere derart ausgebildet werden, dass das Filterelement, welches beispielsweise in Form von einzelnen Körpern vorliegen kann, nicht an der Platte vorbeikommt und somit in seiner Bewegungsfreiheit eingeschränkt werden kann, dass jedoch gleichzeitig Wasser durch die Platte hindurch und/oder an ihr vorbei strömen kann.

Geschickter Weise ist vorgesehen, dass die Platte als Rückhalteelement zum Rückhalten des Filterelements im vom Einlass zum Auslass strömenden Fluid ausgebildet ist. Damit kann insbesondere das Filterelement, insbesondere wenn es in Form mehrerer Körper vorliegt, zurückgehalten und/oder gewalkt werden oder es kann das zur Verfügung stehende Volumen definiert bzw. verkleinert werden.

Erfindungsgemäß ist das Filterelement als Anordnung einer Mehrzahl von Körpern, bevorzugt Absorptionskörpern bzw. Sammelkörpern, ausgebildet. Derartige Körper können sich typischerweise in einem begrenzten Volumen frei bewegen. Sie können von dem zu reinigenden Wasser durchströmt und/oder umströmt werden. Sie sind typischerweise so ausgebildet, dass sie Schmutzpartikel und andere Substanzen, welche nicht in die Kanalisation oder in den Vorfluter gelangen sollen, aufnehmen bzw. zurückhalten.

Das Filterelement kann beispielsweise auch als Membran ausgebildet sein. Diese kann beispielsweise eine Porengröße aufweisen, welche ausreichend groß ist dass die zu erwartende Menge Wasser pro Zeiteinheit hindurchströmen kann, dass jedoch gleichzeitig Schmutzpartikel zurückgehalten werden.

Die Körper sind dabei vorzugsweise aus einem Material ausgebildet, welches nicht verklumpt. Das Material soll bzw. die Körper sollen bevorzugt einzeln bleiben. Das Material bzw. die Körper sind elastisch. Die Dichte des Materials bzw. der Körper kann gleich oder ähnlich, beispielsweise mit einer Abweichung von maximal 5 % oder maximal 10 %, zur Dichte von Wasser sein. Damit wird ein Schweben des Materials bzw. der Körper ermöglicht. Die Körper können aus dem gleichen Material oder auch aus unterschiedlichen Materialien ausgebildet sein.

Die Körper können insbesondere aus Kunststoff, insbesondere aus Schaumstoff bzw. aus elastischem Kunststoffmaterial ausgebildet sein. Damit kann insbesondere eine vorteilhafte Aufnahme von Schmutzpartikeln in die Körper erreicht werden.

Gemäß einer Weiterbildung ist vorgesehen, dass die Körper aufgeteilt sind in eine erste Gruppe von Körpern und eine zweite Gruppe von Körpern, wobei die Körper der ersten Gruppe vorzugsweise für eine feinere Reinigung, insbesondere feinkörniger und/oder feinporiger ausgebildet sind als die Körper der zweiten Gruppe. Damit kann eine mehrstufige Reinigung erreicht werden, wobei Partikel unterschiedlicher Größen von jeweils besonders geeignetem Filtermaterial zurückgehalten werden.

Die Körper der ersten Gruppe können insbesondere in Strömungsrichtung des Fluids gesehen den Körpern der zweiten Gruppe nachgelagert angeordnet sein. Somit erfolgt zunächst eine gröbere Filterung, so dass größere Partikel ausgefiltert werden, und dann erfolgt eine feinere Filterung, bei welcher kleinere Partikel ausgefiltert werden. Ein Verstopfen eines feinen Filters durch zu große Partikel kann auf diese Weise vorteilhaft verhindert werden, während gleichzeitig eine feine Filterung des Wassers erreicht werden kann.

Es sei verstanden, dass auch mehr als zwei unterschiedliche Gruppen von Körpern, insbesondere mit mehreren unterschiedlichen Porengrößen, verwendet werden können.

Vorteilhaft sind die Körper der ersten Gruppe von den Körpern der zweiten Gruppe durch eine Abgrenzungsplatte getrennt angeordnet, wobei die Abgrenzungsplatte vorzugsweise als Lochplatte ausgebildet ist. Dies erlaubt eine einfache Trennung der unterschiedlichen Gruppen an Körpern. Wasser kann dabei insbesondere durch die Abgrenzungsplatte durchströmen, insbesondere wenn diese als Lochplatte oder porös ausgebildet ist, oder kann auch neben der Abgrenzungsplatte vorbeiströmen, insbesondere wenn diese vom Behälter beabstandet ist.

Die Abgrenzungsplatte kann gemäß einer vorteilhaften Ausführung in dem Behälter vertikal beweglich ausgebildet sein, vorzugsweise bis zu einem oberen Anschlag. Dies ermöglicht die Übertragung einer Walkbewegung und/oder Volumenverkleinerung zwischen den unterschiedlichen Gruppen von Körpern. Beispielsweise kann auf Körper einer Gruppe eine Kraft ausgeübt werden, welche von diesen Körpern auf die Abgrenzungsplatte und von dieser wiederum auf die Körper der anderen Gruppe übertragen wird.

Die Abgrenzungsplatte ist vorzugsweise in dem Behälter unabhängig von anderen Elementen beweglich. Dies kann eine freie, wenn auch begrenzte Beweglichkeit bedeuten. Insbesondere kann die Abgrenzungsplatte unabhängig von dem Stößel beweglich sein, also nicht mit ihm fest verbunden sein.

Die Abgrenzungsplatte ist gemäß einer Ausführung von dem Stößel separat ausgeführt. Damit kann insbesondere eine unabhängige Beweglichkeit erreicht werden.

Die Abgrenzungsplatte ist vorteilhaft von dem Stößel indirekt über zumindest einen Teil der Körper, insbesondere über die Körper der ersten Gruppe, betätigbar ausgeführt. Dies ermöglicht wie weiter oben bereits erwähnt die Übertragung der Kraft bzw. einer Volumenänderung und/oder Walkbewegung zwischen unterschiedlichen Gruppen von Körpern.

Gemäß einer Ausführung ist vorgesehen, dass die Abgrenzungsplatte entlang einer Anzahl von Führungsschienen im Behälter geführt wird. Damit wird ein Verkippen oder Verklemmen der Abgrenzungsplatte verhindert, was eine zuverlässige Funktion gewährleistet.

Gemäß einer Ausführung ist vorgesehen, dass die Abgrenzungsplatte in einer Richtung, in welcher sie beweglich ist, eine innerhalb des Behälters gegen Verkippen stabilisierende Ausdehnung aufweist. Auch damit kann ein Verkippen oder Verklemmen vermieden werden. Es sei dabei verstanden, dass typischerweise eine solche Ausführung keine vollständige Stabilisierung erreichen kann. Von einer Stabilisierung kann deshalb beispielsweise gesprochen werden, wenn die Abgrenzungsplatte nur um weniger als 1 %, um weniger als 2 % oder um weniger als 5 % verkippt werden kann.

Die Abgrenzungsplatte kann gemäß einer alternativen Ausführung auch starr mit dem Stößel verbunden sein. Dies ermöglicht eine Bewegung der Abgrenzungsplatte zusammen mit dem Stößel. Damit kann eine Walkbewegung und/oder Volumenveränderung unmittelbar auf eine bestimmte Gruppe von Körpern ausgeübt werden.

Oberhalb der Abgrenzungsplatte kann gemäß einer Weiterbildung eine starr mit dem Behälter verbundene Unterteilungsplatte angeordnet sein, welche eine untere Begrenzung für die Körper der ersten Gruppe darstellt und welche vorzugsweise als Lochplatte ausgebildet ist. Die Unterteilungsplatte kann vorteilhaft eine untere Begrenzung für die Körper der ersten Gruppe bilden.

Die Unterteilungsplatte kann insbesondere eine obere Begrenzung für die Abgrenzungsplatte darstellen. Anders ausgedrückt kann sie als Anschlag wirken. Es kann jedoch alternativ auch ein separater Anschlag vorhanden sein.

Der Behälter ist gemäß einer vorteilhaften Ausführung in einen oberen Teil und einen unteren Teil aufgeteilt, wobei der obere Teil eine größere horizontale Querschnittsfläche aufweist als der untere Teil. Durch eine kleinere Querschnittsfläche des unteren Teils kann beispielsweise der auf den Stößel wirkende Wasserdruck verringert werden.

Vorteilhaft ist die Unterteilungsplatte zwischen oberem Teil und unterem Teil angeordnet. Dies erlaubt eine einfache Befestigung und eine Trennung der für die Körper der ersten und zweiten Gruppe vorgesehenen Räume.

Gemäß einer bevorzugten Ausführung ist in dem Behälter ein unteres Rückhalteelement zum Rückhalten des Filterelements in einer Richtung entgegen dem vom Einlass zum Auslass strömenden Fluid angeordnet, wobei das untere Rückhalteelement zwischen dem Einlass und dem Filterelement angeordnet ist und vorzugsweise als Lochplatte ausgebildet ist. Damit kann das Filterelement insbesondere gegen das untere Rückhalteelement gedrückt werden, beispielsweise von dem Stößel, um es dadurch zu reinigen, insbesondere durch Walken oder durch Volumenverkleinerung. Außerdem verhindert das untere Rückhalteelement typischerweise, dass das Filterelement bzw. Teile des Filterelements wie beispielsweise Körper aus dem Einlass austreten, beispielsweise wenn gerade kein Wasser durch den Einlass hereinkommt.

Vorteilhaft ist in dem Behälter eine Luftzuführeinheit vorhanden, welche dazu ausgebildet ist, Luft in den Behälter einzubringen, welche nach Austritt aus der Luftzuführeinheit durch das im Behälter befindliche Fluid strömt.

Die Luft kann insbesondere zum Vereinzeln des Filterelements dienen bzw. verwendet werden. Damit kann die Reinigungswirkung der Filterelemente auf das durchströmende Wasser verbessert werden. Außerdem kann die Reinigung des Filterelements selbst verbessert werden.

Der durch die Luft erzielte Effekt kann die Körper vereinzeln und für ein Umspülen / Umschichten der Körper sorgen. Bodennahes Einbringen der Luft hat sich dabei als besonders effektiv erwiesen.

Gemäß einer Weiterbildung weist die Nachkläreinheit eine Steuerung auf, welche insbesondere dazu konfiguriert ist, ein erfindungsgemäßes Verfahren auszuführen. Das Verfahren wird weiter unten näher beschrieben werden. Es kann auf alle beschriebenen Ausführungen und Varianten zurückgegriffen werden.

Die Nachkläreinheit umfasst vorzugsweise mindestens einen Sensor, der eine Information über die Fluidqualität bzw. Wasserqualität an die Steuerung, bevorzugt kontinuierlich, übermittelt. Die Steuerung kann auch mit dem Ventil und/oder der Antriebseinheit steuerungstechnisch verbunden sein. Damit kann die Steuerung beispielsweise einen Reinigungsvorgang abhängig davon einleiten, dass das Wasser nicht mehr ausreichend gereinigt wird, was auf eine zu starke Beladung bzw. Verschmutzung des Filterelements hinweist. Die Erfindung betrifft des Weiteren ein Verfahren zum Reinigen eines Filterelements gemäß Anspruch 10, welches in einer Nachkläreinheit, insbesondere gemäß der Erfindung, für eine Abwasserreinigungsvorrichtung angeordnet ist. Auf das Filterelement wird eine Walkbewegung aufgeprägt, so dass sich das Filterelement, insbesondere periodisch, verformt und dadurch Schmutz aus dem Filterelement austritt.

Erfindungsgemäß wird ein für das Filterelement zur Verfügung stehendes Volumen verkleinert, so dass Schmutz aus dem Filterelement aufgrund einer Reibung von Bestandteilen des Filterelements gegeneinander, welche durch die Verkleinerung des Volumens induziert wird, austritt.

Mittels eines solchen Verfahrens können die weiter oben beschriebenen Vorteile erreicht werden.

Die Erfindung betrifft des Weiteren die Verwendung einer induzierten Walkbewegung und/oder eines induzierten Fluidstroms und/oder einer Reibung von Elementen gegeneinander zum Reinigen eines Filterelements in einer Nachkläreinheit für eine Abwasserreinigungsvorrichtung, insbesondere in einer Nachkläreinheit gemäß der Erfindung.

Auch damit können die weiter oben beschriebenen Vorteile erreicht werden.

Hinsichtlich der Nachkläreinheit kann bei den Verfahren und der Verwendung auf alle beschriebenen Ausführungen und Varianten zurückgegriffen werden.

Die Erfindung betrifft des Weiteren eine Abwasserreinigungsvorrichtung, aufweisend einen Schlammfang, ein Belebungsbecken zur biologischen Abwasserreinigung, welches dem Schlammfang fluidisch nachgeschaltet ist, und eine erfindungsgemäße Nachkläreinheit, welche dem Belebungsbecken fluidisch nachgeschaltet ist. Hinsichtlich der Nachkläreinheit kann auf alle beschriebenen Ausführungen und Varianten zurückgegriffen werden.

Damit können die weiter oben beschriebenen Vorteile einer erfindungsgemäßen Nachkläreinheit für eine Abwasserreinigungsvorrichtung nutzbar gemacht werden.

In diesem Zusammenhang wird insbesondere darauf hingewiesen, dass alle im Bezug auf eine Vorrichtung, also die Nachkläreinheit bzw. die Abwasserreinigungsvorrichtung, beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche, also die Ansprüche, die auf die Nachkläreinheit bzw. die Abwasserreinigungsvorrichtung gerichtet sind, berücksichtigt und beansprucht werden und zählen ebenfalls zur Offenbarung.

In der Zeichnung ist die Erfindung insbesondere in Ausführungsbeispielen schematisch dargestellt. Es zeigen:
- Fig. 1: eine erfindungsgemäße Abwasseraufbereitungsvorrichtung,
- Fig. 2: eine erfindungsgemäße Nachkläreinheit gemäß einem ersten Ausführungsbeispiel,
- Fig. 3: eine erfindungsgemäße Nachkläreinheit gemäß einem zweiten Ausführungsbeispiel,
- Fig. 4a: eine erfindungsgemäße Nachkläreinheit gemäß einem dritten Ausführungsbeispiel,
- Fig. 4b: eine erfindungsgemäße Nachkläreinheit gemäß einem vierten Ausführungsbeispiel.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

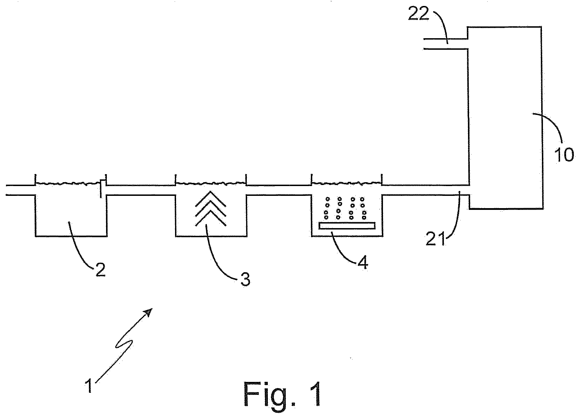

Figur 1 zeigt eine Abwasserreinigungsvorrichtung 1 gemäß einem Ausführungsbeispiel der Erfindung.

Die Abwasserreinigungsvorrichtung 1 weist einen Schlammfang 2 auf. In diesen wird Abwasser, welches gereinigt bzw. aufbereitet werden soll, eingeleitet. Der Schlammfang 2 dient somit insbesondere als Eingangskomponente der Abwasserreinigungsvorrichtung 1. Im Schlammfang 2 werden insbesondere grobe Schmutzpartikel zumindest teilweise ausgefiltert. Außerdem kann abgeschiedener Schlamm dem Wasser zugesetzt werden, worauf weiter unten näher eingegangen werden wird.

Die Abwasserreinigungsvorrichtung 1 weist ferner einen Koaleszenzabscheider 3 auf, welcher dem Schlammfang 2 fluidisch nachgeschaltet ist. Somit gelangt Wasser, welches aus dem Schlammfang 2 abläuft, in den Koaleszenzabscheider 3. In diesem werden weitere Schmutzteilchen und unerwünschte Bestandteile abgeschieden.

Die Abwasserreinigungsvorrichtung 1 weist ferner ein Belebungsbecken 4 auf, welches dem Koaleszenzabscheider 3 fluidisch nachgeschaltet ist. Somit gelangt Wasser, welches aus dem Koaleszenzabscheider 3 abläuft, in das Belebungsbecken 4.

In dem Belebungsbecken 4 werden durch das Einleiten von Luft, eventuell auch durch das Vorsehen einer geeigneten Temperatur, günstige Bedingungen für das Wachstum von Bakterien geschaffen, welche unerwünschte Bestandteile im zu reinigenden Abwasser zersetzen. Hierbei handelt es sich insbesondere um Bakterien, welche Öle und ähnliche Bestandteile zersetzen. Somit wird das Abwasser von Ölen, welche besonders umweltschädlich sind wenn sie in eine Kanalisation oder in einen Vorfluter gelangen würden, gereinigt.

Allerdings verbleiben auch nach der Reinigung im Belebungsbecken 4 noch Schmutzteilchen und andere unerwünschte Bestandteile im Abwasser. Deshalb weist die Abwasserreinigungsvorrichtung 1 ferner eine Nachkläreinheit 10 auf. Diese ist dem Belebungsbecken 4 fluidisch nachgeschaltet, so dass aus dem Belebungsbecken 4 ablaufendes Wasser in die Nachkläreinheit 10 gelangt. Hierzu weist die Nachkläreinheit 10 einen Einlass 21 auf. Außerdem weist die Nachkläreinheit 10 einen Auslass 22 auf, mittels welchem gereinigtes Wasser in eine Kanalisation oder in einen Vorfluter geleitet werden kann.

Bei der Nachkläreinheit 10 handelt es sich um eine erfindungsgemäße Nachkläreinheit gemäß einem der nachfolgend beschriebenen Ausführungsbeispiele.

Es sei verstanden, dass die Darstellung der Abwasseraufbereitungsvorrichtung 1 in Figur 1 lediglich schematisch ist.

Es sei des Weiteren verstanden, dass in der Nachkläreinheit 10 Schlamm abgetrennt werden kann, welcher Bakterien aus dem Behandlungsbecken 4 enthält. Dieser Schlamm kann in den Schlammfang 2 zurückgeführt werden, um für einen Kreislauf der Bakterien zu sorgen. Die zugehörigen Mechanismen sind in Figur 1 nicht separat dargestellt.

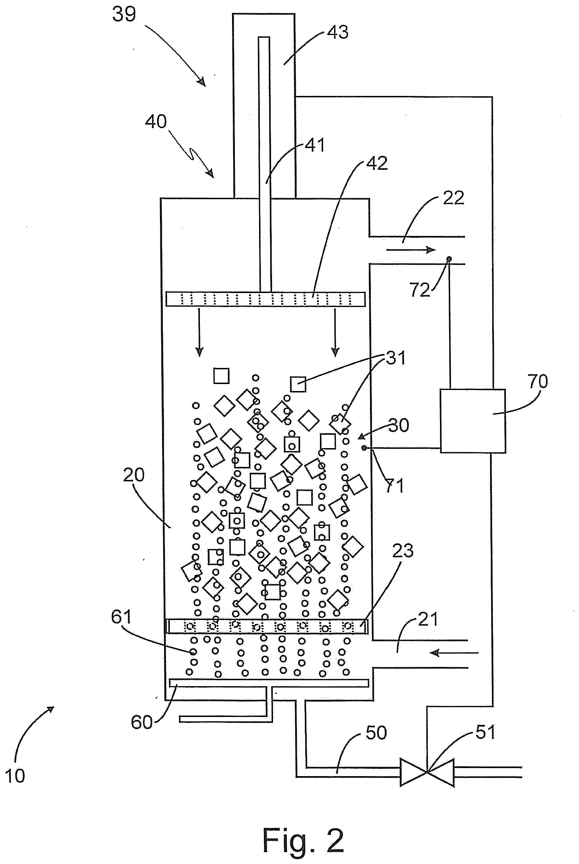

Figur 2 zeigt eine Nachkläreinheit 10 gemäß einem ersten Ausführungsbeispiel der Erfindung. Eine solche Nachkläreinheit 10 kann beispielsweise in der Abwasserreinigungsvorrichtung 1 von Figur 1 verwendet werden.

Die Nachkläreinheit 10 weist einen Behälter 20 auf. In diesem ist untenseitig ein Einlass 21 ausgebildet, durch welchen Wasser, insbesondere aus einem Behandlungsbecken, in den Behälter 20 gelangt. Oben ist in dem Behälter 20 ein Auslass 22 ausgebildet, über welchen Wasser, insbesondere nach dessen Reinigung im Behälter 20 wie weiter unten beschrieben, wieder aus dem Behälter 20 austritt und in eine Kanalisation oder in einen Vorfluter abgeleitet werden kann.

In dem Behälter 20 ist ein Filterelement 30 angeordnet. Das Filterelement 30 ist vorliegend in Form einer Vielzahl von (schüttgutartigen) Körpern 31 ausgebildet. Die Körper 31 können sich innerhalb eines gewissen Raums im Behälter 20 frei bewegen. Wie dieser Raum definiert wird ist weiter unten näher erläutert.

Die Körper 31 sind aus porösem, flexiblem Kunststoff ausgebildet. Durch die Porosität wird eine hohe Aufnahmefähigkeit für Schmutzteilchen erreicht, welche in die Poren eindringen und sich dort an einer großen Oberfläche ablagern können. Dadurch wird Wasser, welches vom Einlass 21 zum Auslass 22 durch den Behälter 20 strömt, von Schmutzteilchen gereinigt. Die Körper 31 sind würfelartig mit einer Kantenlänge von einigen cm, üblicherweise 2 bis 5 cm.

Untenseitig wird der für die Körper 31 des Filterelements 30 zur Verfügung stehende Raum durch ein in dem Behälter 20 angeordnetes Rückhalteelement 23 definiert. Dieses ist in Form einer Lochplatte ausgebildet, so dass Wasser und auch Luft durch das Rückhalteelement 23 durchdringen können, jedoch keiner der Körper 31.

Das Rückhalteelement 23 ist im Behälter auf einer Höhe unmittelbar über dem Einlass 21 angeordnet. Dadurch wird verhindert, dass die Körper 31 in den Einlass 21 gelangen und diesen beispielsweise verstopfen könnten. Zwar ist der Fluidstrom durch den Behälter 20 typischerweise von unten nach oben gerichtet, so dass die Körper 31 schon aus diesem Grund eher vom Einlass 21 weggedrückt werden, jedoch kann der Fluidstrom zeitweise auch zum Erliegen kommen, beispielsweise wenn gerade kein Abwasser mehr zum Reinigen da ist. Außerdem kann der Fluidstrom auch umgekehrt werden, beispielsweise während eines Reinigungsvorgangs. Hierauf wird weiter unten näher eingegangen werden.

Dem Filterelement 30 ist eine Reinigungseinheit 39 zugeordnet. Die Reinigungseinheit 39 dient grundsätzlich dazu, in den Körpern 31 bzw. allgemeiner ausgedrückt in dem Filterelement 30 enthaltene Schmutzteilchen, welche typischerweise dem durchfließenden Wasser entzogen wurden, wieder aus den Körpern 31 bzw. aus dem Filterelement 30 zu entfernen. Damit können die Körper 31 regeneriert werden, insbesondere wenn sie ihre Aufnahmekapazität für Schmutzpartikel erreicht haben oder kurz davor sind. Bei Ausführungen gemäß dem Stand der Technik war es in diesem Fall nötig, die Körper 31 auszutauschen oder zu entnehmen und in einer externen Vorrichtung zu reinigen. Beides ist mit hohem Aufwand, hohen Kosten und einer beträchtlichen Stillstandszeit verbunden. Dies kann nunmehr vermieden werden, da mittels der Reinigungseinheit 39 eine Reinigung der Körper 31 bzw. des Filterelements 30 innerhalb des Behälters 20 erfolgen kann.

Die Reinigungseinheit 39 ist vorliegend als Walkeinheit 40 ausgebildet. Die Walkeinheit 40 weist einen Stößel 41 auf, welcher wiederum eine Platte 42 aufweist. Die Platte 42 ist horizontal ausgerichtet und ist als Lochplatte ausgebildet. Somit kann Wasser durch die Platte 42 hindurchtreten, wohingegen die Körper 31 nicht durch die Platte 42 hindurchtreten können. Diese werden vielmehr von der Platte 42 zurückgehalten.

Der Stößel 41 ist zusammen mit seiner Platte 42 vertikal beweglich ausgeführt. Zum Antrieb dient eine Antriebseinheit 43, welche oben auf dem Behälter 20 aufsitzt. Diese Antriebseinheit 43 ist dazu ausgebildet, den Stößel 41 in vertikaler Richtung reziprozierend zu bewegen. Insbesondere kann der Stößel 41 von der in Figur 2 dargestellten Position aus nach unten bewegt werden, wie dies durch zwei Pfeile in Figur 2 dargestellt ist.

Die Platte 42 begrenzt den Raum, welcher den Körpern 31 zur Verfügung steht, nach oben. Wie bereits weiter oben erwähnt wurde begrenzt gleichzeitig das Rückhalteelement 23 diesen Raum nach unten. Damit ist der den Körpern 31 im Behälter 20 zur Verfügung stehende Raum allseitig begrenzt.

Wird nunmehr der Stößel 41 nach unten bewegt, so wird der den Körpern 31 zur Verfügung stehende Raum verkleinert. Dies erfolgt bei typischem Betrieb so weit, dass die Körper 31, welche ja wie weiter oben bereits erwähnt aus einem flexiblen Material ausgebildet sind, zusammengedrückt werden. Dadurch werden die in ihnen enthaltenen Schmutzpartikel und andere Fremdstoffe herausgedrückt. Dieses Prinzip ist beispielsweise von üblichen, im Haushalt verwendeten Schwämmen bekannt.

Das Herausdrücken von Schmutzpartikeln ist jedoch nicht die einzige Wirkung, welche das Herunterdrücken der Platte 42 bewirkt. Durch den sich verkleinernden Raum, in welchem sich die Körper 31 bewegen können, wird auch die Reibung zwischen den Körpern 31 erhöht. Damit werden ebenfalls Schmutzpartikel und andere Fremdstoffe von den Körpern 31 gelöst, insbesondere solche, welche sich an der Oberfläche befinden.

Zudem wird durch die Bewegung der Platte 42 eine Strömung in dem im Behälter 20 befindlichen Wasser erzeugt, welche dem bereits weiter oben beschriebenen Fluss vom Einlass 21 zum Auslass 22 überlagert wird. Bewegt sich die Platte 42 nach unten, so sind die durch die Platte 42 induzierte Strömung und der Fluss vom Einlass 21 zum Auslass 22 entgegengerichtet. Bewegt sich die Platte 42 nach oben, so sind die durch die Platte 42 induzierte Strömung und der Fluss vom Einlass 21 zum Auslass 22 gleichgerichtet. In letzterem Fall ist die Strömungsgeschwindigkeit deutlich höher als bei reinem Fluss des Wassers vom Einlass 21 zum Auslass 22. Durch diese erhöhte Strömungsgeschwindigkeit werden Schmutzpartikel oder andere Fremdstoffe, welche sich in oder an den Körpern 31 befinden, von den Körpern 31 gelöst.

Durch die Kombination der drei beschriebenen Reinigungswirkungen kann eine besonders gründliche Reinigung der Körper 31 erreicht werden. Es sei darauf hingewiesen, dass die Reinigung der Körper 31 erfolgt, ohne dass die Körper 31 aus dem Behälter 20 entnommen werden. Der Vorgang ist somit sehr einfach durchzuführen. Längere Stillstandszeiten und umfangreiche Arbeiten außerhalb des Behälters 20 werden vermieden, was einen erheblichen Fortschritt im Vergleich zum Stand der Technik darstellt.

In dem Behälter 20 ist ferner eine Luftzuführeinheit 60 angeordnet. Die Luftzuführeinheit 60 befindet sich unten im Behälter 20 und gibt Luft 61 in Form von Luftblasen in das im Behälter 20 befindliche Wasser ab. Mittels der Luft 61 wird die Reinigungswirkung der Körper 31 unterstützt, da sie vereinzelt und in Bewegung gehalten werden.

Die Nachkläreinheit 10 weist ferner einen Schmutzablass 50 auf, welcher in Form eines Kanals ausgebildet ist, der unten in den Behälter 20 einmündet. Der Schmutzablass 50 ist mit einem Ventil 51 versehen, mittels welchem er geöffnet und geschlossen werden kann.

Wenn die Körper 31 des Filterelements 30 gereinigt werden kann das Ventil 51 geöffnet werden, so dass Schmutzpartikel und andere Fremdstoffe, welche aus den Körpern 31 herausgelöst werden, in den Schmutzablass 50 gelangen und abgeführt werden können. Hierbei kann insbesondere der bereits weiter oben erwähnte, nach unten gerichtete Strom des Wassers verwendet werden, welcher durch einen sich nach unten bewegenden Stößel 41 mit Platte 42 erzeugt werden kann. Um diese Wirkung zu unterstützten kann beispielsweise der Einlass 21 geschlossen werden, so dass kein von unten nach oben gerichteter Fluidstrom mehr im Behälter 20 herrscht.

Die Nachkläreinheit 10 weist des Weiteren eine Steuerung 70 auf, welche dazu ausgebildet ist, den Betrieb der Nachkläreinheit 70 zu überwachen und zu steuern. Die Steuerung 70 ist vorliegend als elektronische Steuerungsvorrichtung ausgeführt, welche Speichermittel und Prozessormittel aufweist, wobei in den Speichermitteln Programmcode gespeichert ist, bei dessen Ausführung sich die Prozessormittel in definierter Weise verhalten.

In dem Behälter 20 ist ein erster Sensor 71 angeordnet. In dem Auslass 22 ist ein zweiter Sensor 72 angeordnet. Die Sensoren 71, 72 sind jeweils als Wassergütesensoren ausgebildet, welche die Verschmutzung des Wassers an der jeweiligen Stelle messen. Insbesondere mittels des zweiten Sensors 72 kann die Reinigungswirkung des Filterelements 30 überwacht werden. Befinden sich im über den Auslass 22 ausgegebenen Wasser zu viele unerwünschte Substanzen, welche eigentlich vom Filterelement 30 zurückgehalten werden sollten, so weist dies auf eine zu hohe Beladung der Körper 31 mit Schmutzpartikeln hin, welche die Aufnahmefähigkeit herabsetzt. Eine Reinigung bzw. Regenerierung der Körper 31 erscheint dann angezeigt.

Die Steuerung 70 ist mit den beiden Sensoren 71, 72, mit der Antriebseinheit 43 und mit dem Ventil 51 verbunden. Dies ermöglicht der Steuerung 70 zu erkennen, wann eine Reinigung der Körper 31 erforderlich ist, und diese auch durchzuführen. Hierzu aktiviert die Steuerung 70 die Antriebseinheit 43, so das der Stößel 41 wie weiter oben beschrieben bewegt wird und damit der Reinigungsvorgang für die Körper 31 ausgelöst wird. Im geeigneten Moment öffnet die Steuerung 70 dann da Ventil 51, so dass der aus den Körpern 31 herausgelöste Schmutz abgeleitet werden kann.

Der Betrieb der Nachkläreinheit 10 erfolgt somit vollautomatisch und erfordert weder manuelle Eingriffe noch eine Betriebsunterbrechung. Damit werden Aufwand und Kosten im Vergleich zum Stand der Technik deutlich verringert.

Es sei jedoch verstanden, dass Aufgaben, welche in diesem Ausführungsbeispiel als automatisiert beschrieben wurden, grundsätzlich auch manuell ausgeführt werden können. Beispielsweise kann der Stößel 41 auch manuell betätigbar ausgeführt sein, und auch das Ventil 51 kann manuell betätigbar ausgeführt sein. In diesem Fall kann beispielsweise auf die Steuerung 70 verzichtet werden und die Nachkläreinheit 10 kann beispielsweise so ausgeführt sein, dass sie auch an einem Ort ohne Stromversorgung verwendet werden kann.

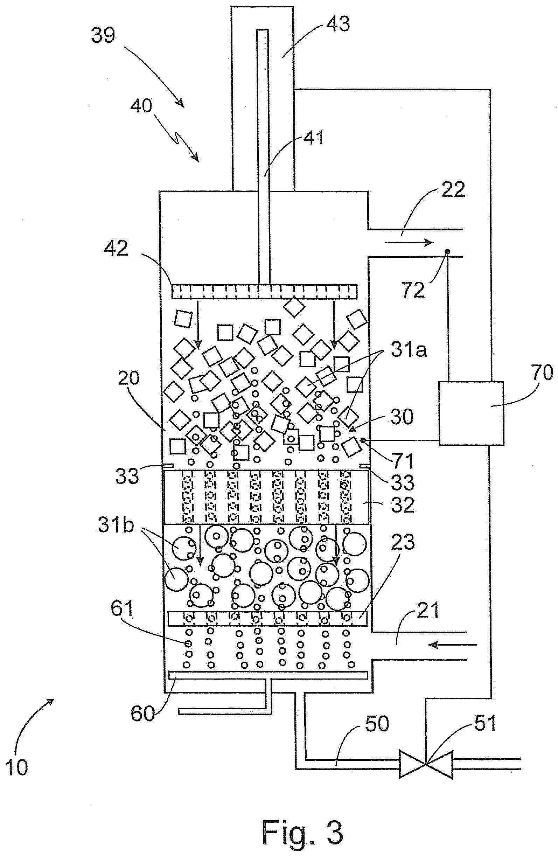

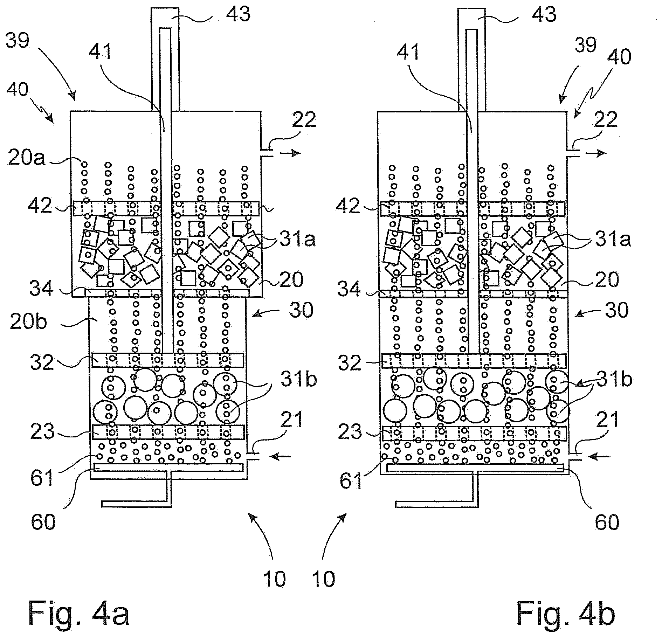

Die nachfolgend mit Bezug auf die Figuren 3, 4a und 4b beschriebenen Ausführungsbeispiele sind ähnlich zum ersten Ausführungsbeispiel ausgeführt, welches eben beschrieben wurde. Nachfolgend wird deshalb hauptsächlich auf die Unterschiede zum ersten Ausführungsbeispiel eingegangen.

Figur 3 zeigt eine Nachkläreinheit 10 gemäß einem zweiten Ausführungsbeispiel der Erfindung. Dabei ist das Filterelement 30 nicht wie beim ersten Ausführungsbeispiel aus identischen Körpern 31 ausgebildet, sondern aus zwei Gruppen von unterschiedlichen Körpern. Zum einen handelt es sich hierbei um eine erste Gruppe von Körpern 31a, zum anderen handelt es sich um eine zweite Gruppe von Körpern 31b. Die Körper 31a der ersten Gruppe sind dabei über den Körpern 31b der zweiten Gruppe angeordnet. Somit werden die Körper 31a der ersten Gruppe erst dann vom durch den Behälter 20 strömenden Wasser durchflossen, wenn es die Körper 31b der zweiten Gruppe bereits durchflossen hat. Die Trennung zwischen den beiden Gruppen von Körpern 31a, 31b erfolgt über eine Abgrenzungsplatte 32, auf welche weiter unten detaillierter eingegangen wird.

Die Körper 31b der zweiten Gruppe sind grobporiger ausgeführt als die Körper 31a der ersten Gruppe. Dies führt dazu, dass dem Wasser zunächst durch die Körper 31b der zweiten Gruppe gröbere Schmutzpartikel und andere Fremdstoffe entzogen werden, während feinere Schmutzpartikel und Fremdstoffe durchgelassen werden. Diese werden dann erst durch die Körper 31a der ersten Gruppe aus dem Wasser entfernt.

Durch diese zweistufige Vorgehensweise wird eine bessere Reinigungswirkung erreicht, da Porengrößen auf unterschiedliche Teilchengrößen abgestimmt werden können und kleine Poren nicht durch zu große Teilchen verstopft werden.

Die Körper 31a der ersten Gruppe sind von den Körpern 31b der zweiten Gruppe durch die bereits weiter oben erwähnte Abgrenzungsplatte 32 getrennt. Die Abgrenzungsplatte 32 erstreckt sich horizontal über nahezu die gesamte horizontale Ausdehnung des Behälters 20. Die Abgrenzungsplatte 32 ist dabei in vertikaler Richtung beweglich, d.h. sie kann sich nach unten und oben bewegen. Begrenzt wird diese Bewegung nach oben hin von einem Anschlag 33, welcher vertikal etwa mittig im Behälter 20 angeordnet ist und im Behälter 20 wandseitig umläuft.

Die Abgrenzungsplatte 32 ist als Lochplatte ausgebildet, so dass Wasser und Luft durchdringen können, dass jedoch keine Körper 31a, 31b durchdringen können. Hierdurch wird die abgrenzende Wirkung erreicht.

Die Abgrenzungsplatte 32 weist eine vertikale Ausdehnung auf, welche verhindert, dass die Abgrenzungsplatte 32 verkippt oder verklemmt. Dadurch wird die Abgrenzungsplatte 32 auf einfache Weise stabilisiert, wobei insbesondere auf Führungsschienen oder ähnliche Elemente verzichtet werden kann.

Im Zustand, welcher in Figur 3 dargestellt ist, grenzt die Abgrenzungsplatte 32 unmittelbar von unten an den Anschlag 33 an. Dies kann grundsätzlich durch eigenen Auftrieb, durch die Wirkung der Luft 61 und/oder durch eine nach oben gerichtete Kraft der Körper 31b der zweiten Gruppe erreicht werden.

Es sei jedoch verstanden, dass grundsätzlich auch eine Stabilisierung beispielsweise über Führungsschienen möglich ist. Dadurch kann insbesondere die Bauhöhe verringert werden.

Wird der Stößel 41 mit seiner Platte 42 zum Reinigen der Körper 31a, 31b nach unten bewegt, so übt die Platte 42 zunächst eine Kraft auf die Körper 31a der ersten Gruppe aus. Diese werden gegen die Abgrenzungsplatte 32 gedrückt und somit elastisch verformt, wie dies bereits weiter oben mit Bezug auf die Körper 31 im ersten Ausführungsbeispiel beschrieben wurde. Dies führt zu der ebenfalls bereits beschriebenen Reinigungswirkung auf die Körper 31a der ersten Gruppe.

Wenn die Körper 31a der ersten Gruppe nach unten gedrückt werden, üben diese eine Kraft auf die Abgrenzungsplatte 32 aus, welche die Abgrenzungsplatte 32 von dem in Figur 3 dargestellten Zustand aus nach unten drückt. Dadurch übt die Abgrenzungsplatte 32 wiederum eine Kraft auf die Körper 31b der zweiten Gruppe aus, welche die Körper 31b der zweiten Gruppe zusammendrückt und somit auch für diese Körper 31b die entsprechende Reinigungswirkung erzeugt.

Trotz Aufteilung in zwei Gruppen werden somit die Körper 31a, 31b im zweiten Ausführungsbeispiel ebenso gereinigt wie die Körper 31 im ersten Ausführungsbeispiel. Das Zusammendrücken der Körper 31b der zweiten Gruppe erfolgt dabei wie beschrieben indirekt.

Figur 4a zeigt eine Nachkläreinheit 10 gemäß einem dritten Ausführungsbeispiel der Erfindung. Diese weist ähnlich der Nachkläreinheit 10 gemäß dem zweiten Ausführungsbeispiel zwei Gruppen von Körpern 31a, 31b mit dazwischen angeordneter Abgrenzungsplatte 32 auf.

Gemäß dem dritten Ausführungsbeispiel ist die Abgrenzungsplatte 32 nicht frei beweglich, sondern vielmehr starr mit dem Stößel 41 verbunden. Somit bewegen sich die Platte 42 und die Abgrenzungsplatte 32 synchron, wenn sich der Stößel 41 bewegt.

Durch diese Ausführung werden die Körper 31b der zweiten Gruppe nicht wie beim zweiten Ausführungsbeispiel indirekt, sondern vielmehr direkt durch den Stößel 41 zusammengedrückt. Um eine untere Begrenzung für die Körper 31a der ersten Gruppe zu bilden ist dabei eine Unterteilungsplatte 34 vertikal etwa mittig im Behälter 20 angeordnet. Diese ist als Lochplatte ausgeführt, lässt also Wasser und Luft durch, jedoch keine Körper 31a.

Bei der Nachkläreinheit 10 gemäß dem dritten Ausführungsbeispiel ist der Behälter 20 in einen oberen Teil 20a und einen unteren Teil 20b aufgeteilt. Der untere Teil 20b hat dabei einen geringeren horizontalen Querschnitt als der obere Teil 20a. Als Grenze zwischen den beiden Teilen 20a, 20b fungiert die Unterteilungsplatte 34.

Durch den geringeren horizontalen Querschnitt des unteren Teils 20b wird der auf die Abgrenzungsplatte 32 durch das Wasser ausgeübte Druck verringert. Damit kann in bestimmten Verwendungen ein einfacherer Betrieb erreicht werden.

Figur 4b zeigt eine Nachkläreinheit 10 gemäß einem vierten Ausführungsbeispiel der Erfindung. Diese ist nahezu identisch zum dritten Ausführungsbeispiel ausgebildet, wobei als einziger Unterschied keine Unterteilung des Behälters 20 in einen oberen Teil und einen unteren Teil vorgesehen ist.

Bei den dritten und vierten Ausführungsbeispielen wurde auf die Darstellung und Beschreibung des Schmutzablasses 50, des Ventils 51, der Steuerung 70 und der Sensoren 71, 72 verzichtet. Hierzu sei auf die Darstellungen der Figuren 2 und 3 sowie auf die obige zugehörige Beschreibung verwiesen.

Nachfolgend werden mögliche Merkmale des Vorschlages strukturiert wiedergegeben. Die nachfolgenden strukturiert wiedergegebenen Merkmale können beliebig untereinander kombiniert werden und können in beliebiger Kombination in die Ansprüche der Anmeldung aufgenommen werden. Dem Fachmann ist klar, dass sich die Erfindung bereits aus dem Gegenstand mit den wenigsten Merkmalen ergibt. Insbesondere sind nachfolgend vorteilhafte oder mögliche Ausgestaltungen, nicht jedoch die einzig möglichen Ausgestaltungen der Erfindung wiedergegeben.

## Patentansprüche

1. Nachkläreinheit für eine Abwasserreinigungsvorrichtung (1), welche einen Behälter (20), in welchem ein Einlass (21) und ein Auslass (22) ausgebildet sind und ein Filterelement (30) aufweist, welches in dem Behälter (20) zum Klären eines Fluides, welches vom Einlass (21) zum Auslass (22) strömt, angeordnet ist und eine Reinigungseinheit (39) vorgesehen ist, welche dazu ausgebildet ist, das Filterelement (30) zu reinigen, **dadurch gekennzeichnet, dass** das Filterelement (30) als Anordnung einer Mehrzahl von Körpern (31) ausgebildet ist, wobei die Körper (31) elastisch sind und die Reinigungseinheit (39) eine Volumenverkleinerungseinheit ist, welche dazu ausgebildet ist, zum Reinigen des Filterelements (30) ein für das Filterelement (30) zur Verfügung stehendes Volumen innerhalb des Behälters (20) zu verkleinern.

2. Nachkläreinheit nach Anspruch 1, **dadurch gekennzeichnet, dass** die Reinigungseinheit (39) eine Walkeinheit (40) ist, welche dazu ausgebildet ist, das Filterelement (30) zum Reinigen, insbesondere periodisch, zu verformen.

3. Nachkläreinheit nach einem der vorhergehenden Ansprüche, **dadurch gekennzeichnet, dass** die Reinigungseinheit (39) als Stößel (41) ausgebildet ist und insbesondere der Stößel (41) entlang eines Wegs reziprozierend antreibbar ist und/oder zumindest entlang einer Teilstrecke des Wegs mit dem Filterelement (30) in Kontakt steht.

4. Nachkläreinheit nach Anspruch 3, **dadurch gekennzeichnet, dass** der Stößel (41) eine Platte (42) aufweist, welche in dem Behälter (20) derart angeordnet ist, dass seitlich an der Platte (42) Fluid vorbeiströmen kann und/oder welche zumindest teilweise fluiddurchlässig ausgebildet ist, beispielsweise als Lochblech und insbesondere die Platte (42) als Rückhalteelement zum Rückhalten des Filterelements (30) im vom Einlass (21) zum Auslass (22) strömenden Fluid ausgebildet ist.

5. Nachkläreinheit nach einem der vorhergehenden Ansprüche, **dadurch gekennzeichnet, dass** die Körper (31) aufgeteilt sind in eine erste Gruppe von Körpern (31a) und eine zweite Gruppe von Körpern (31b), wobei die Körper (31a) der ersten Gruppe vorzugsweise für eine feinere Reinigung, insbesondere feinkörniger und/oder feinporiger ausgebildet sind als die Körper (31b) der zweiten Gruppe.

6. Nachkläreinheit nach Anspruch 5, **dadurch gekennzeichnet, dass** die Körper (31a) der ersten Gruppe in Strömungsrichtung des Fluids gesehen den Körpern (31b) der zweiten Gruppe nachgelagert angeordnet sind.

7. Nachkläreinheit nach einem der vorhergehenden Ansprüche, **dadurch gekennzeichnet, dass** in dem Behälter (20) ein unteres Rückhalteelement (23) zum Rückhalten des Filterelements (30) in einer Richtung entgegen dem vom Einlass (21) zum Auslass (22) strömenden Fluid angeordnet ist, wobei das untere Rückhalteelement (23) zwischen dem Einlass (21) und dem Filterelement (30) angeordnet ist und vorzugsweise als Lochplatte ausgebildet ist und/oder in dem Behälter (20) eine Luftzuführeinheit (60) vorhanden ist, welche dazu ausgebildet ist, Luft (61) in den Behälter (20) einzubringen, welche nach Austritt aus der Luftzuführeinheit (60) durch das im Behälter (20) befindliche Fluid strömt.

8. Nachkläreinheit nach einem der vorhergehenden Ansprüche, **dadurch gekennzeichnet, dass** die Nachkläreinheit (10) eine Steuerung (70) aufweist, welche insbesondere dazu konfiguriert ist, ein Verfahren nach Anspruch 10 auszuführen.

9. Nachkläreinheit nach einem der vorhergehenden Ansprüche, **dadurch gekennzeichnet, dass** die Nachkläreinheit (10) mindestens einen Sensor (71, 72) umfasst, der dazu ausgelegt ist, eine Information über die Fluid-(Wasser-)Qualität an die Steuerung (70), bevorzugt kontinuierlich, zu übermitteln und/oder die Steuerung (70) mit einem Ventil (51) und/oder der Antriebseinheit (43) der Nachkläreinheit (10) steuerungstechnisch verbunden ist.

10. Verfahren zum Reinigen eines Filterelements, welches in einer Nachkläreinheit einer Abwasserreinigungsvorrichtung angeordnet ist, wobei das Filterelement als Anordnung einer Mehrzahl von Körpern (31) ausgebildet, wobei die Körper (31) elastisch sind, und in einem Behälter (20) angeordnet ist und eine Reinigungseinheit (39) vorgesehen ist, welche dazu ausgebildet ist, das Filterelement (30) zu reinigen und die Reinigungseinheit (39) eine Volumenverkleinerungseinheit ist, welche dazu ausgebildet ist, zum Reinigen des Filterelements (30) ein für das Filterelement (30) zur Verfügung stehendes Volumen innerhalb des Behälters (20) zu verkleinern, wobei auf das Filterelement eine Walkbewegung aufgeprägt wird, so dass sich das Filterelement, insbesondere periodisch verformt und dadurch Schmutz aus dem Filterelement austritt und/oder ein für das Filterelement zur Verfügung stehendes Volumen verkleinert wird, so dass Schmutz aus dem Filterelement aufgrund einer Reibung von Bestandteilen des Filterelements gegeneinander, welche durch die Verkleinerung des Volumens induziert wird, austritt.

11. Verwendung einer induzierten Walkbewegung zum Reinigen eines Filterelements in einer Nachkläreinheit für eine Abwasserreinigungsvorrichtung, in einer Nachkläreinheit nach einem der Ansprüche 1 bis 9.

12. Abwasserreinigungsvorrichtung, aufweisend einen Schlammfang (2), ein Belebungsbecken (4) zur biologischen Abwasserreinigung, welches dem Schlammfang (2) fluidisch nachgeschaltet ist, und eine Nachkläreinheit (10) nach einem der Ansprüche 1 bis 9, welche dem Belebungsbecken (4) fluidisch nachgeschaltet ist.

## Claims

1. Secondary clarification unit for a waste water purification apparatus (1), comprising a tank (20) in which an inlet (21) and an outlet (22) are formed, and a filter element (30) arranged in the container (20) for clarifying a fluid flowing from the inlet (21) to the outlet (22), and a purification unit (39) is provided, which is configured to clean the filter element (30), **characterised in that** the filter element (30) is configured as an arrangement of a plurality of bodies (31), wherein the bodies (31) are elastic, and the cleaning unit (39) is a volume reduction unit which is configured, for cleaning the filter element (30), to reduce a volume within the tank (20) that is available to the filter element (30).

2. Secondary clarification unit according to claim 1, **characterised in that** the cleaning unit (39) is a fulling unit (40) which is configured to deform the filter element (30) for cleaning, in particular periodically.

3. Secondary clarification unit according to any one of the preceding claims, **characterised in that** the cleaning unit (39) is configured as a ram (41) and in particular the ram (41) can be driven along a path in a reciprocating manner and/or is in contact with the filter element (30) along at least part of the path.

4. Secondary clarification unit according to claim 3, **characterised in that** the ram (41) has a plate (42) which is arranged in the tank (20) in such a way that fluid can flow laterally past the plate (42) and/or which is configured to be at least partially fluid-permeable, for example as a perforated plate, and in particular the plate (42) is configured as a retaining element for retaining the filter element (30) in the fluid flowing from the inlet (21) to the outlet (22).

5. Secondary clarification unit according to any one of the preceding claims, **characterised in that** the bodies (31) are divided into a first group of bodies (31a) and a second group of bodies (31b), the bodies (31a) of the first group preferably being configured for finer cleaning, in particular being more fine-grained and/or finer-pored than the bodies (31b) of the second group.

6. Secondary clarification unit according to claim 5, **characterised in that** the bodies (31a) of the first group are arranged downstream of the bodies (31b) of the second group as viewed in the direction of flow of the fluid.

7. Secondary clarification unit according to any one of the preceding claims, **characterised in that** a lower retaining element (23) for retaining the filter element (30) in a direction opposite to the fluid flowing from the inlet (21) to the outlet (22) is arranged in the tank (20), the lower retaining element (23) being arranged between the inlet (21) and the filter element (30) and preferably being configured as a perforated plate and/or an air supply unit (60) is present in the container (20), which air supply unit is configured to introduce air (61) into the tank (20), which air, after being discharged from the air supply unit (60), flows through the fluid in the container (20).

8. Secondary clarification unit according to any one of the preceding claims, **characterised in that** the secondary clarification unit (10) has a controller (70) which is configured in particular to carry out a method according to claim 10.

9. Secondary clarification unit according to any one of the preceding claims, **characterised in that** the secondary clarification unit (10) comprises at least one sensor (71, 72) which is configured to transmit information about the fluid (water) quality to the control unit (70), preferably continuously, and/or the control unit (70) is connected by control technology to a valve (51) and/or the drive unit (43) of the secondary clarification unit (10).

10. Method for cleaning a filter element which is arranged in a secondary clarification unit of a waste water purification apparatus, wherein the filter element is configured as an arrangement of a plurality of bodies (31), wherein the bodies (31) are elastic, and is arranged in a tank (20) and a cleaning unit (39) is provided which is configured to clean the filter element (30) and the cleaning unit (39) is a volume reduction unit which is configured, for cleaning the filter element (30), to reduce a volume available for the filter element (30) within the tank (20), wherein a fulling movement is applied to the filter element so that the filter element is deformed, in particular periodically, so that soil is discharged from the filter element and/or a volume available for the filter element is reduced so that soil is discharged from the filter element due to rubbing of components of the filter element against each other, which is induced by the reduction in volume.

11. Use of an induced fulling movement for cleaning a filter element in a secondary clarification unit for a waste water treatment apparatus, in a secondary clarification unit according to any one of claims 1 to 9.

12. Waste water purification apparatus, comprising a sludge trap (2), an activation tank (4) for biological waste water purification, which is fluidically connected downstream of the sludge trap (2), and a secondary clarification unit (10) according to any one of claims 1 to 9, which is fluidically connected downstream of the activation tank (4).

## Revendications

1. Unité de clarification pour un dispositif de nettoyage des eaux usées (1) qui présente un récipient (20) dans lequel une entrée (21) et une sortie (22) sont conçues, et un élément filtrant (30), qui est agencé dans le récipient (20) pour clarifier un fluide, qui s'écoule de l'entrée (21) à la sortie (22), et une unité de nettoyage (39), qui est conçue pour nettoyer l'élément filtrant (30) est prévue, **caractérisée en ce que** l'élément filtrant (30) est conçu sous la forme d'un agencement d'une pluralité de corps (31), les corps (31) étant élastiques et l'unité de nettoyage (39) étant une unité de réduction de volume, qui est conçue pour réduire un volume disponible pour l'élément filtrant (30) à l'intérieur du récipient (20) pour le nettoyage de l'élément filtrant (30).

2. Unité de clarification selon la revendication 1, **caractérisée en ce que** l'unité de nettoyage (39) est une unité de foulage (40), qui est conçue pour déformer l'élément filtrant (30) pour le nettoyage, en particulier périodiquement.

3. Unité de clarification selon l'une quelconque des revendications précédentes, **caractérisée en ce que** l'unité de nettoyage (39) est conçue comme un poussoir (41) et en particulier le poussoir (41) peut être entraîné en déplacement alterné le long d'une voie et/ou est en contact avec l'élément filtrant (30) au moins le long d'une partie de la voie.

4. Unité de clarification selon la revendication 3, **caractérisée en ce que** le poussoir (41) présente une plaque (42),qui est agencée dans le récipient (20) de sorte que du fluide peut s'écouler latéralement devant la plaque (42) et/ou qui est conçue au moins partiellement perméable au fluide, par exemple sous forme de tôle perforée, et en particulier la plaque (42) est conçue comme un élément de retenue pour retenir l'élément filtrant (30) dans le fluide s'écoulant de l'entrée (21) à la sortie (22).

5. Unité de clarification selon l'une quelconque des revendications précédentes, **caractérisée en ce que** les corps (31) sont divisés en un premier groupe de corps (31a) et un second groupe de corps (31b), les corps (31a) du premier groupe étant de préférence conçus pour un nettoyage plus fin, en particulier à grains plus fins et/ou à pores plus fins que les corps (31b) du second groupe.

6. Unité de clarification selon la revendication 5, **caractérisée en ce que** les corps (31a) du premier groupe sont agencés en aval des corps (31b) du second groupe, vu dans le sens d'écoulement du fluide.

7. Unité de clarification selon l'une quelconque des revendications précédentes, **caractérisée en ce qu'**un élément de retenue inférieur (23) pour retenir l'élément filtrant (30) dans un sens opposé au fluide s'écoulant de l'entrée (21) à la sortie (22) est agencé dans le récipient (20), dans laquelle l'élément de retenue inférieur (23) est agencé entre l'entrée (21) et l'élément filtrant (30) et est de préférence conçu comme une plaque perforée et/ou une unité d'alimentation en air (60) est présente dans le récipient (20), qui est conçue pour introduire de l'air (61) dans le récipient (20), qui s'écoule à travers le fluide se trouvant dans le récipient (20) après avoir quitté l'unité d'alimentation en air (60).

8. Unité de clarification selon l'une quelconque des revendications précédentes, **caractérisée en ce que** l'unité de clarification (10) présente une commande (70), qui est configurée en particulier pour exécuter un procédé selon la revendication 10.

9. Unité de clarification selon l'une quelconque des revendications précédentes, **caractérisée en ce que** l'unité de clarification (10) comprend au moins un capteur (71, 72), qui est réalisé pour transmettre une information sur la qualité du fluide (eau) à la commande (70), de préférence en continu, et/ou la commande (70) est reliée par technologie de commande à une vanne (51) et/ou à l'unité d'entraînement (43) de l'unité de clarification (10).

10. Procédé de nettoyage d'un élément filtrant, qui est agencé dans une unité de clarification d'un dispositif de nettoyage des eaux usées, dans lequel l'élément filtrant est conçu comme un agencement d'une pluralité de corps (31), dans lequel les corps (31) sont élastiques, et est agencé dans un récipient (20), et une unité de nettoyage (39) est prévue, qui est conçue pour nettoyer l'élément filtrant (30) et l'unité de nettoyage (39) est une unité de réduction de volume, qui est conçue pour nettoyer l'élément filtrant (30), pour réduire un volume disponible pour l'élément filtrant (30) à l'intérieur du récipient (20), dans lequel un déplacement de foulage est appliqué à l'élément filtrant de sorte que l'élément filtrant est déformé, en particulier périodiquement, de sorte que la saleté sort de l'élément filtrant et/ou un volume disponible pour l'élément filtrant est réduit de sorte que la saleté sort de l'élément filtrant en raison d'un frottement des composants de l'élément filtrant les uns contre les autres, qui est induit par la réduction du volume.

11. Utilisation d'un déplacement de foulage induit pour nettoyer un élément filtrant dans une unité de clarification d'un dispositif de nettoyage des eaux usées, dans une unité de clarification selon l'une quelconque des revendications 1 à 9.

12. Dispositif de nettoyage des eaux usées, présentant un piège à boues (2), un bassin d'activation (4) pour le nettoyage biologique des eaux usées, qui est connecté par voie fluidique en aval du piège à boues (2), et une unité de clarification (10) selon l'une quelconque des revendications 1 à 9, qui est connectée par voie fluidique en aval du bassin d'activation (4).
